# EUROPÄISCHE PATENTSCHRIFT

(11) **EP 3 106 217 B1**
(45) Veröffentlichungstag und Bekanntmachung des Hinweises auf die Patenterteilung: **29.04.2020**
(21) Anmeldenummer: 16173263.1
(22) Anmeldetag: 07.06.2016
(51) Int. Cl.: B01J 2/04

(54) **VORRICHTUNG UND VERFAHREN ZUM KÜHLEN UND ZERSTÄUBEN FLÜSSIGER ODER PASTÖSER STOFFE**
DEVICE AND METHOD FOR COOLING AND ATOMIZING LIQUID OR PASTE-LIKE SUBSTANCES
DISPOSITIF ET PROCEDE DE REFROIDISSEMENT ET DE PULVERISATION DE MATIERES LIQUIDES ET PATEUSES

(30) Priorität: 12.06.2015 DE 102015007604
(43) Veröffentlichungstag der Anmeldung: 21.12.2016
(73) Patentinhaber: Messer France S.A.S., 92156 Suresnes Cedex (FR); Messer Group GmbH, 65812 Bad Soden (DE)
(72) Erfinder: Gockel, Frank, 42553 Velbert (DE); Tebib, Emir, 77410 Gassy (FR)
(74) Vertreter: Münzel, Joachim R.

(56) Entgegenhaltungen:
- WO-A1-01/03821
- WO-A1-96/00610
- US-A1- 2013 126 102

## Beschreibung

Die Erfindung betrifft eine Vorrichtung zum Kühlen und Zerstäuben flüssiger oder pastöser Stoffe, mit einer Düsenanordnung, die mit einer Zuleitung für einen zu zerstäubenden flüssigen oder pastösen Stoff, einer Zuleitung für ein Expansionsmedium und einer Zuleitung für ein Zerstäubungsgas strömungsverbunden ist. Die Erfindung betrifft des Weiteren ein entsprechendes Verfahren zum Kühlen und Zerstäuben flüssiger oder pastöser Stoffe.

Aus der WO 99/22855 ist ein Verfahren zum Abkühlen und Zerstäuben von flüssigen oder pastösen Stoffen bekannt, bei dem ein flüssiger oder pastöser Stoff mit flüssigem oder überkritischem Kohlendioxid zusammengeführt und das dabei entstehende Gemisch anschließend auf Umgebungsdruck entspannt wird. Durch die bei der Entspannung erfolgende Expansion wird der flüssige oder pastöse Stoff in feine Partikel zerstäubt und dabei auf eine Temperatur bevorzugt unterhalb seiner Erstarrungstemperatur abgekühlt. Dabei werden das flüssige Gas und der flüssige Stoff entweder an einer der Düsenanordnung vorgeschalteten Mischstelle, beispielsweise einem zur Düsenanordnung führenden Rohr, oder innerhalb einer Zweistoffdüse der Düsenanordnung zusammengeführt und anschließend entspannt.

Dies kann in bestimmten Fällen zu Nachteilen führen: Zum einen muss die Mischtemperatur oberhalb der Kristallisationstemperatur des flüssigen Stoffes liegen, da es sonst vor der Entspannung schon zu einer Kristallisation und somit zur Bildung fester Partikel kommen kann, die die zur Entspannung des Gemisches eingesetzte Entspannungsdüse verstopfen können. Es ist daher erforderlich, entweder den flüssigen Stoff so hoch zu erhitzen, dass die Mischtemperatur über der Kristallisationstemperatur liegt, oder die Mischung in einem weiteren Wärmetauscher über den Kristallisationspunkt des flüssigen Stoffes aufzuwärmen. Hierbei ist die Energiedichte umso höher, je kleiner die Austauschfläche des Wärmetauschers ist. Beide Varianten haben den Nachteil, dass die oft temperaturempfindlichen zu zerstäubenden Stoffe großen Wärmemengen ausgesetzt sind und somit Schaden nehmen können, wie dies beispielsweise bei bestimmten Aromastoffen oder bei Probiotika der Fall sein kann.

Zum anderen setzt die Verbindung der beiden Produktströme voraus, dass beide Ströme den gleichen Druck besitzen. So muss beispielsweise bei der Verwendung von unter Mitteldruck bei 60 bar gespeichertem Kohlendioxid der zu zerstäubende Stoff gleichfalls mit 60 bar zugeführt werden. Die Produktseite ist somit entsprechend dem hohen Druck des zugeführten Kohlendioxids auszulegen, bzw. es muss das Produkt mittels Hochdruckpumpen zugeführt werden. Weiterhin müssen beide Seiten Rückschlagventile enthalten, um ein Durchschlagen des Produktes in den Vorlagebehälter oder Gasspeichertank zu verhindern.

Erfolgt die Mischung erst innerhalb einer Zweistoffdüse, kann man die Stoffströme unabhängig führen und somit eine niedrige Temperatur und Druckstufe auf der Produktseite gewährleisten. Dabei besteht jedoch bei hohen Gasüberschüssen die Gefahr, dass der gesamte Düsenkörper stark abkühlt und es zu einer Kristallisation des flüssigen Stoffes oder Stoffgemisches bereits in der Düse kommt. Zur Lösung dieses Problems könnte man also den wärmen Stoffstrom und den kalten Gasstrom innerhalb der Düsenanordnung durch eine Isolierung thermisch trennen und beide Stoffströme erst nach dem Austritt aus der Mündungsöffnung der Düse gleichzeitig mischen und entspannen. Dies funktioniert hinsichtlich einer Abkühlung oder Kristallisation des flüssigen Stoffes oder Stoffgemisches gut und es kann das Verhältnis von warmen Stoffstrom und kaltem Gasstrom nahezu beliebig eingestellt werden; es hat sich jedoch gezeigt, dass bei einer Mischung beider Stoffströme *vor* dem Entspannen, also noch innerhalb der Düsenanordnung oder stromauf zu dieser, eine bessere Zerstäubung, d.h. Partikel mit geringerem durchschnittlichem Teilchendurchmesser in Gestalt feinerer Tröpfchen oder feiner kristallisierter Pulverteilchen bei ansonsten gleichen Ausgangsbedingungen, erzielt werden kann. Der Grund hierfür könnte sein, dass durch die thermische Trennung der beiden Stoffströme innerhalb der Zweistoffdüse und der erst vor der Mündungsöffnung erfolgenden ("außenliegenden") Mischung die Entspannungsenergie des expandierenden Gasstromes nicht so effizient genutzt werden kann, was entsprechend größere Teilchendurchmesser zur Folge hat.

Der Gegenstand der WO 2005/049192 A1 sucht diesem Nachteil dadurch zu begegnen, dass der zu zerstäubende, flüssige oder pastöse Stoffstrom mit unter hohem Druck stehendem gasförmigem Kohlendioxid in einer Zweistoffdüse gemischt und anschließend entspannt wird, was zu feinen Produktpartikeln führt. Eine zur Kristallisation der Partikel führende Abkühlung erfolgt anschließend durch Entspannen von flüssigem Kohlendioxid an einer zweiten Düse, die im gewissen Abstand zur Düse des Stoff/Kohlendioxidgas-Gemisches angeordnet ist. Hier besteht jedoch das Problem, dass die thermische Ankopplung des Produkts an das expandierende flüssigen Kohlendioxids oft nur unzureichend ist und die Abkühlung des Produkts nicht immer optimal gelingt.

Ein weiteres Konzept zur Partikelerzeugung mit einer Dreistoffdüse ist aus der WO96/00610 A1 bekannt.

Der Erfindung liegt daher die Aufgabe zu Grunde, eine Vorrichtung sowie ein Verfahren zum Zerstäuben bei gleichzeitiger Abkühlung flüssiger oder pastöser Stoffe oder Stoffgemische anzugeben, die bzw. das eine hohe Effizienz besitzt und bei dem die Gefahr eines Einfrierens einer Düsen minimiert ist.

Diese Aufgabe wird gelöst durch eine Vorrichtung mit den Merkmalen des Patentanspruchs 1 sowie durch ein Verfahren mit den Merkmalen des Patentanspruchs 5.

Die erfindungsgemäße Vorrichtung ist also dadurch gekennzeichnet, dass die Düsenanordnung als Dreistoffdüse ausgebildet ist, durch die innerhalb eines gemeinsamen Gehäuses Zuführungen für den zu zerstäubenden Stoff, das Expansionsmedium und das Zerstäubungsgas geführt sind, die an einer gemeinsamen Mündungsöffnung ausmünden, wobei die Zuführungen derart durch das Gehäuse der Dreistoffdüse geführt sind, dass die Zuführung für das Zerstäubungsgas zwischen den Zuführungen für den Stoff und das Expansionsmedium verläuft und wobei die Zuleitung für den Stoff und die Zuleitung für das Zerstäubungsgas mit einer Heizeinrichtung verbunden sind.

In der erfindungsgemäßen Vorrichtung werden also drei Stoffströme, nämlich ein Stoffstrom des zu zerstäubenden Stoffes oder Stoffgemischs (im Folgenden auch "Produkt" genannt), ein gasförmiger Stoffstrom (hier Zerstäubungsgas genannt) und ein Stoffstrom eines Expansionsmediums, beispielsweise ein unter Druck stehendes, verflüssigtes oder überkritisches Gas, zur Dreistoffdüse transportiert, zusammengeführt und auf den in der Umgebung der Dreistoffdüse herrschenden Druck entspannt. Die räumliche Nähe beim Austritt der drei Stoffströme aus der Dreistoffdüse trägt wesentlich zu einer effizienten Zerstäubung und Abkühlung des Produktstromes bei, da sowohl das Zerstäubungsgas als auch das Entspannungsmedium beim seiner Entspannung an der Dreistoffdüse eine starke Volumenausdehnung erfährt und die entsprechende Entspannungsenergie direkt auf den warmen Stoffstrom wirken kann. Die Zusammenführung der Stoffströme erfolgt dabei bevorzugt noch innerhalb der Dreistoffdüse unmittelbar stromauf zur Mündungsöffnung.

Bei der Führung der Stoffströme durch die Dreistoffdüse wird das Zerstäubungsgas zwischen den beiden anderen Stoffströmen geführt. Das Zerstäubungsgas hat dabei die Aufgabe, eine thermische Trennung zwischen dem Stoffstrom des Produkts und dem Stoffstrom des Expansionsmediums herzustellen. Seine Temperatur ist demnach so zu wählen, dass er beim thermischen Kontakt in der Dreistoffdüse einerseits weder das herangeführte Produkt unter seiner Kristallisationstemperatur abkühlt noch über seine Verdampfungstemperatur aufheizt, andererseits ein bei tiefen Temperaturen herangeführtes Expansionsmedium nicht wesentlich erwärmt wird.

Eine besonders vorteilhafte Ausgestaltung der Erfindung sieht vor, dass die Zuleitungen in der Dreistoffdüse als drei koaxial zueinander angeordnete Zuführungen ausgestaltet sind, wobei eine zentrale Zuführung mit der Zuleitung für das Produkt oder mit der Zuleitung für das Entspannungsmedium und eine sich radial außenseitig unmittelbar an die zentrale Zuführung anschließende Zuführung für das Zerstäubungsgas mit der Zuleitung für das Zerstäubungsgas strömungsverbunden ist. Eine weitere, radial außenseitig an dieser Zuführung angeordnete Zuführung ist mit der Zuleitung für das Entspannungsmedium oder das Produkt (je nachdem, welche Zuleitung nicht mit der zentralen Zuführung strömungsverbunden ist) strömungsverbunden. Dabei ist bei dieser Ausgestaltung unerheblich, ob die Zuführung für das Produkt innerhalb und die Zuführung für das Expansionsmedium außerhalb der Zuführung für das Zerstäubungsgas angeordnet ist oder umgekehrt, die Zuführung für das Expansionsmedium innerhalb und die Zuführung für das Produkt außerhalb der Zuführung für das Zerstäubungsgas.

Alternativ zur vorgenannten Ausgestaltung ist es jedoch beispielsweise auch vorstellbar, für einen oder mehrere der Stoffströme eine Mehrzahl von parallel zur Düsenachse verlaufenden Strömungskanälen vorzusehen, die derart angeordnet sind, dass sich jeweils ein für das Zerstäubungsgas bestimmter Strömungskanal zwischen einem Strömungskanal für das Produkt und einem Strömungskanal für das Entspannungsmedium befindet.

Um die Temperatur der einzelnen Stoffströme den jeweiligen Erfordernissen anpassen zu können ist vorgesehen, dass zumindest die Zuleitung für den Stoff und die Zuleitung für das Zerstäubungsgas mit einer Heizeinrichtung ausgerüstet ist bzw. jeweils mit einer Heizeinrichtung ausgerüstet sind. Somit kann beispielsweise der zu zerstäubende Stoff auf eine Temperatur gebracht werden, in dem er in flüssiger und gut mittels einer Flüssigpumpe förderbarer Form vorliegt, während zugleich eine geeignete Temperierung des Zerstäubungsgases verhindert, dass das Produkt innerhalb der Dreistoffdüse durch thermischen Kontakt mit kaltem Expansionsmedium eine zum Zerstäuben unzuträgliche Zähigkeit erreicht oder sogar ganz einfriert. Eine Heizeinrichtung kann im Übrigen auch innerhalb eines an die jeweilige Zuleitung angeschlossenen Vorratstanks für das Produkt bzw. das Zerstäubungsgas vorgesehen sein.

Zweckmäßigerweise ist die Zuleitung für das Entspannungsmedium mit einer Heizeinrichtung und/oder einer Kühleinrichtung ausgerüstet. Eine Kühleinrichtung ermöglicht dabei die Unterkühlung des Entspannungsmediums in der Zuleitung und damit die Reduzierung oder Eliminierung einer etwaig vorhandenen Gasphase, die in Form von Gasblasen den gleichmäßigen Zufluss des Entspannungsmediums stören kann und die darüber hinaus einen gegenüber der flüssigen Phase geringeren Kälteinhalt aufweist. Die Kühleinrichtung kann im Übrigen auch innerhalb eines an die Zuleitung angeschlossenen Vorratstanks angeordnet sein.

Die Zuführungen enden dabei im Bereich der Mündungsöffnung der Dreistoffdüse bevorzugt an Austrittsöffnungen, die in axialer Richtung versetzt zueinander angeordnet sind. Insbesondere im Falle koaxial zueinander angeordneter Zuführungen, bei denen die Austrittsöffnung der jeweils weiter innen liegenden Zuführung zurückgesetzt (von der Mündungsöffnung aus gesehen) gegenüber der Austrittsöffnung der jeweils außenseitig benachbarten Zuführung angeordnet ist, bildet sich durch diese Ausgestaltung eine Mischkammer unmittelbar an der Mündungsöffnung aus, die eine besonders innige Durchmischung der Stoffströme erlaubt.

Die Aufgabe der Erfindung wird auch durch ein Verfahren mit den Merkmalen des Patentanspruchs 5 gelöst.

Das erfindungsgemäße Verfahren zum Kühlen und Zerstäuben flüssiger oder pastöser Stoffe, bei dem ein unter Druck stehender zu zerstäubender Stoff, ein Expansionsmedium und ein Zerstäubungsgas an einer Düsenanordnung in Kontakt gebracht und anschließend auf Umgebungsdruck entspannt werden, ist dadurch gekennzeichnet, dass die Stoffströme für den zu zerstäubenden Stoff, das Zerstäubungsgas und das Expansionsmedium vor der Entspannung durch das Gehäuse einer Dreistoffdüse geführt und an einer gemeinsamen Mündungsöffnung der Dreistoffdüse zusammengeführt und anschließend entspannt werden, wobei der Stoffstrom des Zerstäubungsgases innerhalb der Dreistoffdüse zwischen dem Stoffstrom des zu zerstäubenden Stoffes und dem Stoffstrom des Expansionsmediums geführt wird. Das Zerstäubungsgas sorgt für eine thermische Trennung von Produktstrom und dem Strom des Entspannungsmediums innerhalb der Düse, vor der anschließenden innigen Durchmischung und Expansion der Stoffströme an und/oder vor der Mündungsöffnung der Dreistoffdüse.

Dabei wird das Zerstäubungsgas mit einer Temperatur zur Dreistoffdüse geführt, die über der Kristallisationstemperatur des durch die Dreistoffdüse geführten zu zerstäubenden Stoffes liegt. Dadurch wird einem Einfrieren oder Koagulieren des Produkts innerhalb der Dreistoffdüse vorgebeugt.

Durch eine Unterkühlung des Entspannungsmediums vor dessen Zuführung an die Dreistoffdüse wird die Entstehung von Gasblasen im zur Dreistoffdüse geförderten Entspannungsmedium unterdrückt, wodurch eine stabile und gleichmäßige Zerstäubung bewirkt wird.

Beim Expansionsmedium handelt es sich um einen flüssigen oder überkritischen Stoff, der bei der Entspannung zumindest teilweise in Gasform übergeht und sich dabei aufgrund des Joule-Thomson-Effektes stark abkühlt. Bevorzugt handelt es sich bei dem Expansionsmedium um flüssiges oder überkritisches Kohlendioxid. Als bevorzugtes Zerstäubungsgas kommt gasförmiges Kohlendioxid zum Einsatz. Jedoch sind auch andere Gase vorteilhaft als Zerstäubungsgas einsetzbar, beispielsweise Stickstoff, ein Edelgas oder ein Gasgemisch aus den genannten Gasen.

Die erfindungsgemäße Vorrichtung bzw. das erfindungsgemäße Verfahren eignet sich insbesondere zum Zerstäuben von flüssigen oder pastösen Stoffen oder Stoffgemischen bzw. Lösungen aus dem lebensmitteltechnischen, chemischen oder pharmazeutischen Bereich, insbesondere zum Herstellen von Pulvern aus niedrig schmelzenden Fetten oder Emulsionen, von in Fettpulver verkapselten ätherischen Öle oder wasserlöslichen Produkten oder von mit Mikropartikeln aus mit Wirkstoffen versetzten chemischen oder pharmazeutische Trägersubstanzen. Dabei werden Partikeldurchmesser von typischerweise zwischen 2 und 100 µm erreicht.

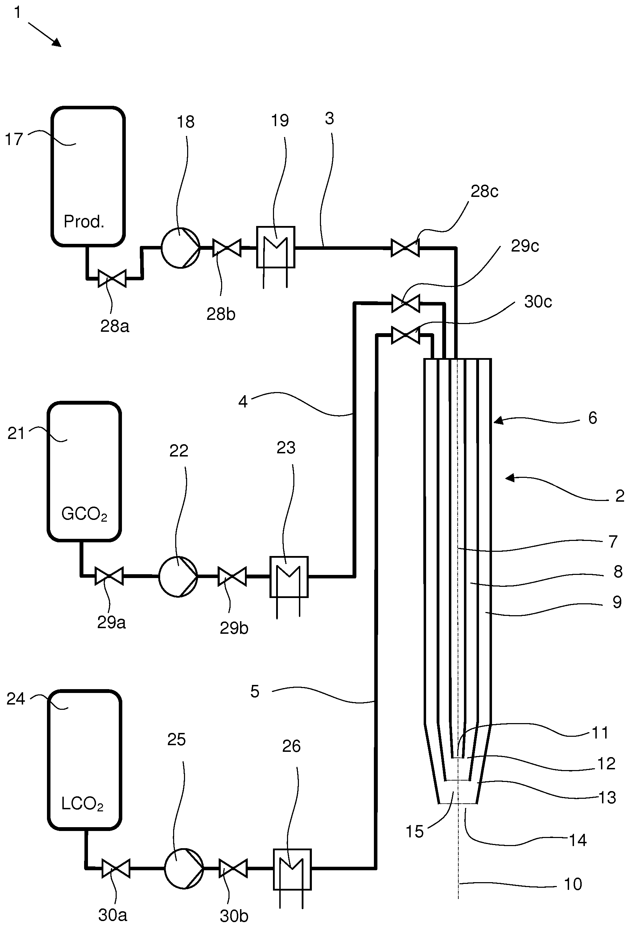

Anhand der Zeichnung soll ein Ausführungsbeispiel der Erfindung näher erläutert werden. Die einzige Zeichnung (Fig. 1) zeigt schematisch eine erfindungsgemäße Vorrichtung.

Die Vorrichtung 1 zum Zerstäuben und Kühlen von flüssigen oder pastösen Stoffen umfasst eine Dreistoffdüse 2, die an eine Zuleitung 3 für einen zu zerstäubenden, flüssigen oder pastösen Stoff, eine Zuleitung 4 für ein Zerstäubungsgas, im Ausführungsbeispiel gasförmiges Kohlendioxid, und eine Zuleitung 5 für ein Expansionsmedium angeschlossen ist. Beim Expansionsmedium handelt es sich um einen flüssigen oder überkritischen, unter hohem Druck herangeführten Stoff, der in der unten näher beschriebenen Weise an der Dreistoffdüse 2 auf den in der Umgebung der Dreistoffdüse 2 herrschenden Druck entspannt wird und sich dabei aufgrund des Joule-Thomson-Effektes stark abkühlt. Im Ausführungsbeispiel handelt es sich bei dem Expansionsmedium um flüssiges oder überkritisches Kohlendioxid.

Innerhalb der Dreistoffdüse 2 sind in einem gemeinsamen Gehäuse 6 drei Zuführungen 7, 8, 9 koaxial zueinander und zur Achse 10 der Dreistoffdüse 2 angeordnet. Dabei ist eine zentrale Zuführung 7 mit der Zuleitung 3 für den zu zerstäubenden Stoff, eine sich radial außenseitig an die Zuführung 7 anschließende Zuführung 8 mit der Zuleitung 4 für das Zerstäubungsgas und eine sich radial außenseitig an der Zuführung 8 anschließende Zuführung 9 mit der Zuleitung 5 für das Expansionsmedium strömungsverbunden. Die Zuführungen 7, 8 9 münden mit Austrittsöffnungen 11, 12, 13 an einer gemeinsamen Mündungsöffnung 14 aus, die stirnseitig am Gehäuse 6 der Dreistoffdüse 2 angeordnet ist. Im Bereich der Mündungsöffnung 14 ist die Austrittsöffnung 11 der Zuführung 7 gegenüber der Austrittsöffnung 12 der Zuführung 8 und diese wiederum etwas zurückgesetzt gegenüber der Austrittsöffnung 13 der Zuführung 9 angeordnet, wodurch sich stromauf zur Mündungsöffnung 14 eine Mischkammer 15 ausbildet.

Beim Betrieb der Vorrichtung 1 wird ein zu zerstäubender, flüssiger oder pastöser Stoff (Produkt), beispielsweise flüssiges Fett oder ein pharmazeutisches Produkt, aus einem Tank 17 mittels einer Pumpe 18 über die Zuleitung 3 mit einem Druck von beispielsweise 20 bar zur zentralen Zuführung 7 der Dreistoffdüse 2 geleitet. Um eine Kristallisation während des Transports zur Dreistoffdüse 2 zu vermeiden, durchläuft das Produkt dabei eine Heizeinrichtung 19, die den Stoff auf eine hinreichend hohe Temperatur, beispielsweise 80°C aufheizt.

Gleichzeitig mit dem Produkt wird ein Zerstäubungsgas und ein Expansionsmedium zur Dreistoffdüse 2 gefördert. Das Zerstäubungsgas, beispielsweise gasförmiges Kohlendioxid, das in einem Tank 21 bei einem Druck von beispielsweise 20 bar gelagert wird, wird mittels einer Fördereinrichtung 22 oder unter dem Fülldruck des Tanks 21 über die Zuleitung 4 und eine Heizeinrichtung 23 zur Zuführung 8 transportiert. Das Expansionsmedium, beispielsweise flüssiges Kohlendioxid, das in einem Tank 24 bei beispielsweise 20 bar und einer Temperatur von minus 20°C gelagert wird, wird mittels einer Pumpe 25 oder unter dem Fülldruck des Tanks 24 über die Zuleitung 5 zur Zuführung 9 transportiert. In der Zuleitung 5 ist eine Kühleinrichtung 26 angeordnet, beispielsweise eine Kältemaschine oder ein Wärmetauscher, in dem das Expansionsmedium in der Zuleitung 5 in thermischen Kontakt mit einem Kühlmedium, beispielsweise flüssigen Stickstoff gebracht wird.

Die Kühlung in der Kühleinrichtung 26 führt zur einer Unterkühlung des Expansionsmediums, d.h. auf eine Kühlung auf eine Temperatur unterhalb seiner Siedetemperatur. Hierdurch kann einerseits die Kälteleistung pro Kilogramm Expansionsmedium erhöht werden, was eine Reduzierung der benötigten Menge an Expansionsmedium zur Folge hat. Andererseits sorgt die Unterkühlung des Expansionsmediums dafür, dass der Anteil an gasförmiger Phase in dem durch die Zuleitung 5 geführten Expansionsmedium sehr gering ist bzw. kein Gasanteil vorliegt. Dies führt zur einer Stabilisierung des Sprühprozesses bzw. des Kristallisationsvorganges, da bei vorhandenem Gasanteil im Expansionsmedium eine gleichmäßige Zuführung der Kälteleistung nicht gewährleistet werden kann.

Die durch die Zuführungen 7, 8, 9 geführten Stoffströme treffen in der Mischkammer 15 aufeinander und vermischen sich, bevor sie an der Mündungsöffnung 14 der Dreistoffdüse 2 austreten und anschließend auf Umgebungsdruck entspannen. Die räumliche Nähe der Ausmündungen 11, 12, 13 unterstützen dabei die innige Durchmischung der Stoffströme vor und während der Expansion des Zerstäubungsgases und des Expansionsmediums. Das durch die Zuführung 8 der Dreistoffdüse 2 geführte Zerstäubungsgas hat darüber hinaus die Aufgabe, das Produkt in der zentralen Zuleitung 7 thermisch vom kalten, flüssigen Entspannungsmedium in der Zuleitung 9 zu trennen und dadurch eine Kristallisation von Produkt innerhalb der Zuleitung 7 zu verhindern. Dabei kann das Zerstäubungsgas mittels der Heizeinrichtung 23 auf eine vorgegebene oder in Abhängigkeit von gemessenen Parametern mittels einer hier nicht gezeigten Steuereinrichtung geregelte Temperatur von beispielsweise 60°C bis 80°C gebracht werden. Der Durchfluss der Stoffströme kann im Übrigen über Ventile 28a, 28b, 28c; 29a, 29b, 29c; 30a, 30b, 30c mittels der Steuereinrichtung eingestellt oder geregelt werden.

Durch die beschriebene Zusammenführung der drei Stoffströme können insbesondere deren Massenverhältnisse unabhängig voneinander gewählt werden. Zu einem gegeben Durchsatz eines warmen, flüssigen Produktstromes kann beispielsweise der gasförmige Stoffstrom in Druck- und Durchsatz so angepasst werden, dass eine Zerstäubung des Produktstromes in feinste Tröpfchen erfolgt. Gleichzeitig kann der Durchsatz des Expansionsmediums so angepasst werden, dass entweder nur eine Kühlung der Produkttröpfchen stattfindet oder aber diese Abkühlung mit einer Phasenänderung - also Kristallisation - verbunden ist. Die entsprechenden Anpassungen der Drücke und/oder der Durchsätze erfolgt aufgrund empirischer Daten oder in situ durch Regelung in Abhängigkeit von mittels geeigneter Sensoren erfasster Messparameter, beispielsweise in Abhängigkeit von einer gemessenen durchschnittlichen Teilchengröße und/oder Temperatur des zerstäubten Produkts.

### Bezugszeichenliste

- 1.: Vorrichtung
- 2.: Dreistoffdüse
- 3.: Zuleitung
- 4.: Zuleitung
- 5.: Zuleitung
- 6.: Gehäuse
- 7.: Zuführung
- 8.: Zuführung
- 9.: Zuführung
- 10.: Achse
- 11.: Austrittsöffnung
- 12.: Austrittsöffnung
- 13.: Austrittsöffnung
- 14.: Mündungsöffnung
- 15.: Mischkammer
- 16.: -
- 17.: Tank
- 18.: Pumpe
- 19.: Heizeinrichtung
- 20.: -
- 21.: Tank
- 22.: Fördereinrichtung
- 23.: Heizeinrichtung
- 24.: Tank
- 25.: Pumpe
- 26.: Kühleinrichtung
- 27.: -
- 28a, 28b, 28c.: Ventil
- 29a,29b, 29c.: Ventil
- 30a, 30b, 30c.: Ventil

## Patentansprüche

1. Vorrichtung zum Kühlen und Zerstäuben flüssiger oder pastöser Stoffe, mit einer Düsenanordnung, die mit einer Zuleitung (3) für einen zu zerstäubenden, flüssigen oder pastösen Stoff, einer Zuleitung (5) für ein Expansionsmedium und einer Zuleitung (4) für ein Zerstäubungsgas strömungsverbunden ist, wobei
die Düsenanordnung als Dreistoffdüse (2) ausgebildet ist, durch deren Gehäuse (6) mit den jeweiligen Zuleitungen (3, 4, 5) strömungsverbundene Zuführungen (7, 8, 9) für den Stoff, das Expansionsmedium und das Zerstäubungsgas geführt sind und an einer gemeinsamen Mündungsöffnung (14) ausmünden, wobei die Zuführungen (7, 8, 9) derart durch das Gehäuse (6) der Dreistoffdüse (2) geführt sind, dass die Zuführung (8) für das Zerstäubungsgas zwischen der Zuführungen (7) für den Stoff und der Zuführung (9) für das Expansionsmedium angeordnet ist **dadurch gekennzeichnet,**
**dass** die Zuleitung (3) für den Stoff und die Zuleitung (4) für das Zerstäubungsgas mit einer Heizeinrichtung ausgerüstet sind.

2. Vorrichtung nach Anspruch 1, **dadurch gekennzeichnet, dass** die Zuführungen (7, 8, 9) in der Dreistoffdüse (2) als drei koaxial zueinander angeordnete Zuführungen ausgestaltet sind, wobei eine zentrale Zuführung (7) mit der Zuleitung für den Stoff und eine radial an die zentrale Zuführung (7) angrenzende Zuführung (8) mit der Zuleitung (4) für das Zerstäubungsgas strömungsverbunden ist.

3. Vorrichtung nach einem der vorhergehenden Ansprüche, **dadurch gekennzeichnet, dass** die Zuleitung (5) für das Expansionsmedium und/oder ein an die Zuleitung (5) angeschlossener Vorratstank (24) mit einer Heizeinrichtung und/oder mit einer Kühleinrichtung (26) ausgerüstet ist.

4. Vorrichtung nach einem der vorhergehenden Ansprüche, **dadurch gekennzeichnet, dass** die Zuführungen (7, 8, 9) mit Austrittsöffnungen (11, 12, 13) an der Mündungsöffnung (14) der Dreistoffdüse (2) ausmünden, die in axialer Richtung versetzt zueinander angeordnet sind.

5. Verfahren zum Kühlen und Zerstäuben flüssiger oder pastöser Stoffe, bei dem ein zu zerstäubender Stoff, ein Expansionsmedium und ein Zerstäubungsgas an einer Düsenanordnung in Kontakt gebracht werden und anschließend entspannt werden, wobei
die Stoffströme für den zu zerstäubenden Stoff, das Zerstäubungsgas und das Expansionsmedium durch das Gehäuse (6) einer Dreistoffdüse (2) geführt und an einer gemeinsamen Mündungsöffnung (14) zusammengeführt und entspannt werden, wobei der Stoffstrom des Zerstäubungsgases im Gehäuse der Dreistoffdüse (2) zwischen dem Stoffstrom des zu zerstäubenden Stoffes und dem Stoffstrom des Expansionsmediums geführt wird,
**dadurch gekennzeichnet,**
**dass** sowohl das Zerstäubungsgas als auch das Entspannungsmedium beim Entspannen an der Dreistoffdüse (2) eine starke Volumenausdehnung erfahren und das Zerstäubungsgas mit einer Temperatur zur Dreistoffdüse (2) geführt wird, die über der Kristallisationstemperatur des durch die Dreistoffdüse (2) geführten zu zerstäubenden Stoffes liegt.

6. Verfahren nach Anspruch 4 oder 5, **dadurch gekennzeichnet, dass** das Entspannungsmedium im unterkühlten Zustand der Dreistoffdüse (2) zugeführt wird.

7. Verfahren nach einem der Ansprüche 5 bis 7, **dadurch gekennzeichnet, dass** als Expansionsmedium flüssiges oder überkritisches Kohlendioxid und/oder als Zerstäubungsgas gasförmiges Kohlendioxid, Stickstoff oder ein Edelgas zum Einsatz kommt.

## Claims

1. Device for cooling and atomizing liquid or paste-like substances, having a nozzle arrangement which is in fluidic communication with a supply line (3) for a liquid or paste-like substance to be atomized, with a supply line (5) for an expansile medium and with a supply line (4) for an atomizing gas,
where
the nozzle arrangement is designed as a three-fluid nozzle (2), routed through whose housing (6) are feeds (7, 8, 9) for the substance, the expansile medium and the atomizing gas, these feeds being in fluidic communication with the respective supply lines (3, 4, 5) and opening out at a common orifice opening (14), the routing of the feeds (7, 8, 9) through the housing (6) of the three-fluid nozzle (2) being such that the feed (8) for the atomizing gas is disposed between the feeds (7) for the substance and the feed (9) for the expansile medium, **characterized**
**in that** the supply line (3) for the substance and the supply line (4) for the atomizing gas are equipped with a heating facility.

2. Device according to Claim 1, **characterized in that** the feeds (7, 8, 9) in the three-fluid nozzle (2) are configured as three feeds disposed coaxially to one another, with a central feed (7) being in fluidic communication with the supply line for the substance, and a feed (8) radially bordering the central feed (7) being in fluidic communication with the supply line (4) for the atomizing gas.

3. Device according to either of the preceding claims, **characterized in that** the supply line (5) for the expansile medium and/or a reservoir tank (24) connected to the supply line (5) are/is equipped with a heating facility and/or with a cooling facility (26).

4. Device according to any of the preceding claims, **characterized in that** the feeds (7, 8, 9) open out at the orifice opening (14) of the three-fluid nozzle (2) with outlet openings (11, 12, 13) which are disposed with an offset to one another in an axial direction.

5. Method for cooling and atomizing liquid or paste-like substances, wherein a substance to be atomized, an expansile medium and an atomizing gas are brought into contact at a nozzle arrangement and are subsequently expanded, where
the substantive flows for the substance to be atomized, the atomizing gas and the expansile medium are routed through the housing (6) of a three-fluid nozzle (2) and are merged at a common orifice opening (14) and expanded, the substantive stream of the atomizing gas being routed, in the housing of the three-fluid nozzle (2), between the substantive stream of the substance to be atomized and the substantive stream of the expansile medium, **characterized**
**in that** both the atomizing gas and the expansion medium on expansion at the three-fluid nozzle (2) undergo a substantial volume expansion and the atomizing gas is routed to the three-fluid nozzle (2) with a temperature which lies above the crystallization temperature of the substance to be atomized that is routed through the three-fluid nozzle (2).

6. Method according to Claim 4 or 5, **characterized in that** the expansion medium is fed in the subcooled state to the three-fluid nozzle (2).

7. Method according to any of Claims 5 to 7, **characterized in that** the expansile medium employed comprises liquid or supercritical carbon dioxide and/or the atomizing gas employed comprises gaseous carbon dioxide, nitrogen or a noble gas.

## Revendications

1. Dispositif de refroidissement et de pulvérisation de matières fluides ou pâteuses, comprenant un agencement de buse qui est connecté fluidiquement à une conduite d'alimentation (3) pour une matière fluide ou pâteuse à pulvériser, une conduite d'alimentation (5) pour un agent d'expansion et une conduite d'alimentation (4) pour un gaz de pulvérisation,
l'agencement de buse étant réalisé sous forme de buse ternaire (2) à travers le boîtier (6) de laquelle sont guidés des conduits d'alimentation (7, 8, 9) en liaison fluidique avec les conduites d'alimentation respectives (3, 4, 5) pour la matière, l'agent d'expansion et le gaz de pulvérisation, lesquels débouchent au niveau d'une ouverture d'embouchure commune (14), les conduits d'alimentation (7, 8, 9) étant guidés à travers le boîtier (6) de la buse ternaire (2) de telle sorte que le conduit d'alimentation (8) pour le gaz de pulvérisation soit disposé entre les conduits d'alimentation (7) pour la matière et le conduit d'alimentation (9) pour l'agent d'expansion,
**caractérisé en ce que**
la conduite d'alimentation (3) pour la matière et la conduite d'alimentation (4) pour le gaz de pulvérisation sont équipées d'un dispositif de chauffage.

2. Dispositif selon la revendication 1, **caractérisé en ce que** les conduits d'alimentation (7, 8, 9) dans la buse ternaire (2) sont réalisés sous la forme de trois conduits d'alimentation disposés coaxialement les uns aux autres, un conduit d'alimentation central (7) étant en liaison fluidique avec la conduite d'alimentation pour la matière et un conduit d'alimentation (8) adjacent au conduit d'alimentation central (7) étant en liaison fluidique avec la conduite d'alimentation (4) pour le gaz de pulvérisation.

3. Dispositif selon l'une quelconque des revendications précédentes, **caractérisé en ce que** la conduite d'alimentation (5) pour l'agent d'expansion et/ou un réservoir (24) raccordé à la conduite d'alimentation (5) est équipé(e) d'un dispositif de chauffage et/ou d'un dispositif de refroidissement (26).

4. Dispositif selon l'une quelconque des revendications précédentes, **caractérisé en ce que** les conduits d'alimentation (7, 8, 9) débouchent avec des ouvertures de sortie (11, 12, 13) au niveau de l'ouverture d'embouchure (14) de la buse ternaire (2), lesquelles sont disposées de manière décalée les unes par rapport aux autres dans la direction axiale.

5. Procédé de refroidissement et de pulvérisation de matières fluides ou pâteuses, dans lequel une matière à pulvériser, un agent d'expansion et un gaz de pulvérisation sont mis en contact au niveau d'un agencement de buse et sont ensuite détendus, les flux de matière pour la matière à pulvériser, le gaz de pulvérisation et l'agent d'expansion étant guidés à travers le boîtier (6) d'une buse ternaire (2) et étant réunis au niveau d'une ouverture d'embouchure commune (14) et étant détendus, le flux de matière du gaz de pulvérisation étant guidé dans le boîtier de la buse ternaire (2) entre le flux de matière de la matière à pulvériser et le flux de matière de l'agent d'expansion,
**caractérisé en ce que**
à la fois le gaz de pulvérisation et l'agent de détente, lors de la détente au niveau de la buse ternaire (2), subissent une forte dilatation de volume et le gaz de pulvérisation est guidé jusqu'à la buse ternaire (2) à une température qui est au-dessus de la température de cristallisation de la matière à pulvériser guidée à travers la buse ternaire (2).

6. Procédé selon la revendication 4 ou 5, **caractérisé en ce que** l'agent de détente est acheminé à l'état sous-refroidi à la buse ternaire (2).

7. Procédé selon l'une quelconque des revendications 5 à 7, **caractérisé en ce que** l'on utilise comme agent d'expansion du dioxyde de carbone liquide ou surcritique et/ou en tant que gaz de pulvérisation du dioxyde de carbone gazeux, de l'azote ou un gaz noble.
